# EUROPÄISCHE PATENTSCHRIFT

(11) **EP 3 587 190 B1**
(45) Veröffentlichungstag und Bekanntmachung des Hinweises auf die Patenterteilung: **07.04.2021**
(21) Anmeldenummer: 19180911.0
(22) Anmeldetag: 18.06.2019
(51) Int. Cl.: B60R 13/00

(54) **ABDECKKAPPE EINES GASSACKMODULS, GASSACKMODUL SOWIE WERKZEUG ZUM HERSTELLEN EINER SOLCHEN ABDECKKAPPE**
AIR BAG MODULE, COVERING CAP OF AN AIR BAG MODULE AND TOOL FOR PRODUCING SAID COVERING CAP
CAPUCHON DE MODULE DE SAC À GAZ, MODULE DE SAC À GAZ AINSI QU'OUTIL DE FABRICATION D'UN TEL CAPUCHON

(30) Priorität: 22.06.2018 DE 202018103540 U
(43) Veröffentlichungstag der Anmeldung: 01.01.2020
(73) Patentinhaber: Dalphi Metal España, S.A., 36213 Vigo (ES)
(72) Erfinder: López Seco, Jacob Luis, 36350 Nigrán (ES)
(74) Vertreter: ZF Patentabteilung - DIPS

(56) Entgegenhaltungen:
- WO-A1-2013/105391
- DE-A1-102012 011 982
- DE-U1-202014 002 912

## Beschreibung

Die Erfindung betrifft ein Gassackmodul für ein Kraftfahrzeug mit den Merkmalen im Oberbegriff des Anspruchs 1, ein Verfahren zu dessen Herstellung sowie ein Herstellungswerkzeug für eine Abdeckkappe eines solchen Gassackmoduls.

Insbesondere bei fahrerseitigen, im Nabenbereich eines Fahrzeuglenkrads angeordneten Gassackmodulen sind an der dem Fahrzeuginsassen zugewandten Außenseite der Abdeckkappe häufig Dekorelemente angebracht, wie zum Beispiel das Emblem des jeweiligen Fahrzeugherstellers. Diese Dekorelemente müssen zuverlässig und fest an der Abdeckkappe montiert sein, um bei einer Aktivierung des Gassackmoduls ein unerwünschtes Ablösen des Dekorelements zu verhindern.

Das Dekorelement weist beispielsweise rückseitig Montagefüße auf und wird bei seiner Montage von oben auf die Außenseite der Abdeckkappe gesteckt, sodass sich die Montagefüße durch die Montageöffnungen erstrecken. Danach wird die Abdeckkappe mit dem eingesteckten Dekorelement umgedreht. Eine Halteplatte wird anschließend von oben einer Innenseite der Abdeckkappe zugeführt, auf die freien Enden der Montagefüße gesteckt und mit dem Dekorelement fest verbunden.

Beim Umdrehen der Abdeckkappe muss ein Monteur die Abdeckkappe und das Dekorelement zusammenhalten sowie gleichzeitig die Halteplatte zuführen und mit dem Dekorelement verbinden. Dabei kann es vorkommen, dass das Dekorelement wieder aus den Montageöffnungen herausrutscht und zu Boden fällt. Dies führt dann zu einer unerwünscht hohen Montagezeit sowie unter Umständen zu einer Beschädigung und einem notwendigen Austausch des Dekorelements.

Aus der DE 10 2012 011 982 A1 ist bereits ein Gassackmodul nach dem Oberbegriff von Anspruch 1 bekannt, bei dem ein Emblemelement in einem Abdeckelement des Gassackmoduls verrastet, wobei diese Rastverbindung durch ein Verstärkungselement gesichert wird. Auf diese Weise soll das Emblemelement auch nach einer Auslösung des Gassackmoduls fest und zuverlässig mit dem am Abdeckelement verbunden bleiben.

Aufgabe der Erfindung ist es, ein Gassackmodul zu schaffen, das eine vereinfachte Montage eines Dekorelements an einer Abdeckkappe erlaubt. Darüber hinaus soll die Abdeckkappe des Gassackmoduls mit geringem fertigungstechnischen Aufwand herstellbar sein.

Erfindungsgemäß wird diese Aufgabe gelöst durch ein Gassackmodul mit den Merkmalen des Anspruchs 1. Der radiale Überlapp des Montagefußes mit dem elastischen Vorsprung der Abdeckkappe ist zumindest bei einer korrekten Ausrichtung des Dekorelements relativ zur Abdeckkappe vorhanden und kann in einigen Ausführungsvarianten des Gassackmoduls auch ausschließlich bei einer in Umfangsrichtung korrekten Ausrichtung des Dekorelements relativ zur Abdecckappe vorhanden sein.

Ein lichtes Maß zwischen dem elastischen Vorsprung und dem gegenüberliegenden Öffnungsrand der Montageöffnung ist erfindungsgemäß kleiner als die maximale entsprechende Abmessung des zugeordneten Montagefußes. Das Einstecken des Montagefußes in die zugeordnete Montageöffnung ist folglich nur mit einem gewissen Kraftaufwand unter (zumindest temporärer) Verformung des Vorsprungs möglich. Der Verformungswiderstand ist dabei insbesondere so eingestellt, dass das Eigengewicht des Dekorelements nicht ausreicht, um den Montagefuß wieder vollständig von der Abdeckkappe zu lösen. Der elastische Vorsprung stellt somit eine temporäre Montagesicherung dar und verhindert beim Aufstecken der Halteplatte ein Herausrutschen des Dekorelements bzw. der Montagefüße aus den Montageöffnungen der Abdeckkappe.

Gemäß der Erfindung weist der wenigstens eine Montagefuß ein verdicktes axiales Fußende auf, wobei ein lichtes Maß zwischen dem elastischen Vorsprung und dem gegenüberliegenden Öffnungsrand der Montageöffnung kleiner ist als die entsprechende Abmessung des verdickten axialen Fußendes.

Ferner ist das lichte Maß zwischen dem elastischen Vorsprung und dem gegenüberliegenden Öffnungsrand der Montageöffnung größer als die entsprechende Abmessung des Montagefußes zwischen dem Dekorabschnitt und dem verdickten axialen Fußende. Der elastische Vorsprung wird somit bei der Montage durch das verdickte Fußende verformt und schnappt dann zurück. Folglich ist das Dekorelement hier mit axialem Spiel, aber dennoch unverlierbar an der Abdeckkappe befestigt.

Bevorzugt ist der wenigstens eine Montagefuß fest mit der Halteplatte verbunden, insbesondere verrastet.

Der elastische Vorsprung der Abdeckkappe ist insbesondere so ausgeführt, dass der Öffnungsrand in Umfangsrichtung gesehen eine einheitliche Krümmungsrichtung aufweist und lediglich im Bereich des Vorsprungs seine Krümmungsrichtung wenigstens zweimal ändert.

Die Abdeckkappe des Gassackmoduls ist vorzugsweise ein Spritzgussteil aus Kunststoff, insbesondere aus einem elastischen Kunststoff. In diesem Fall lässt sich der Vorsprung beim Herstellen der Abdeckkappe mit geringem Aufwand direkt anformen, sodass der Vorsprung einstückig in die Abdeckkappe integriert ist.

Die Erfindung umfasst im Übrigen auch ein Herstellungswerkzeug für die Abdeckkappe eines oben beschriebenen Gassackmoduls, mit einer ersten Spritzgussform und einer zweiten Spritzgussform, die in axialer Richtung relativ zueinander bewegbar sind und gemeinsam einen Hohlraum in Form der Abdeckkappe definieren können, wobei eine Ausnehmung zur Bildung des radialen Vorsprungs der Abdeckkappe vollständig in der ersten Spritzgussform ausgebildet ist.

Vorzugsweise grenzt die zweite Spritzgussform axial an die Ausnehmung an und liegt beim Einfüllen eines Spritzgussmaterials zur Bildung der Abdeckkappe an einer axialen Stirnseite des elastischen Vorsprungs an. Die Abdeckkappe lässt sich in diesem Fall trotz des angeformten, elastischen Vorsprungs mit geringem Aufwand im Spritzgussverfahren herstellen. Insbesondere sind keine aufwendigen Schieberkonstruktionen zur Ausbildung eines Hinterschnitts notwendig.

Weitere Merkmale und Vorteile der Erfindung ergeben sich aus der nachfolgenden Beschreibung einer bevorzugten Ausführungsform unter Bezugnahme auf die Zeichnungen. In diesen zeigen
- Figur 1 eine perspektivische Innenansicht einer erfindungsgemäßen Abdecckappe eines erfindungsgemäßen Gassackmoduls;
- Figur 2 eine perspektivische Außenansicht der Abdeckkappe gemäß Figur 1 sowie Detailansichten hierzu;
- Figur 3 eine Schnittansicht eines erfindungsgemäßen Gassackmoduls;
- Figur 4 ein Schnittdetail des Gassackmoduls gemäß Figur 3 im Verbindungsbereich zwischen Dekorelement und Abdeckkappe;
- Figur 5 ein schematisches Schnittdetail einer erfindungsgemäßen Abdecckappe sowie eines Dekorelements in deren Verbindungsbereich; und
- Figur 6 ein schematisches Schnittdetail eines erfindungsgemäßen Werkzeugs zur Herstellung der Abdeckkappe gemäß Figur 5 im Bereich einer Montageöffnung.

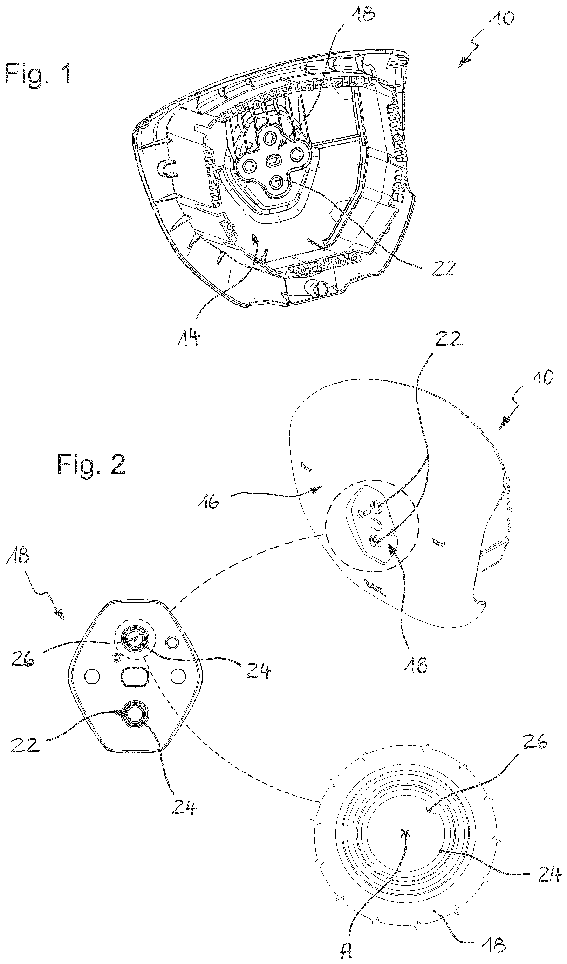

Die Figuren 1 und 2 zeigen eine Abdeckkappe 10 eines Gassackmoduls 12 in perspektivischer Ansicht auf eine Innenseite 14 bzw. eine Außenseite 16 der Abdeckkappe 10, wobei die Innenseite 14 im zusammengesetzten Zustand des Gassackmoduls 12 einem gefalteten Gassack und die Außenseite 16 im eingebauten Zustand des Gassackmoduls 12 einem Insassen oder einem Fahrzeugsitz zugewandt ist.

Die Abdeckkappe 10 des Gassackmoduls 12 umfasst einen Montageabschnitt 18 zur Befestigung eines Dekorelements 20, insbesondere eines Emblems, wobei der Montageabschnitt 18 wenigstens eine Montageöffnung 22 mit einer zentralen Montageachse A und einen umlaufenden Öffnungsrand 24 aufweist. Der Öffnungsrand 24 definiert dabei eine Ebene, die sich im Wesentlichen senkrecht zur Montageachse A erstreckt.

Wie in den vergrößerten Ansichtsdetails der Figur 2 zu erkennen, ist am Öffnungsrand 24 der Abdeckkappe 10 ein elastischer Vorsprung 26 ausgebildet, der sich in Richtung zur Montageachse A erstreckt, also radial einwärts ragt.

In Umfangsrichtung gesehen ändert der Öffnungsrand 24 am elastischen Vorsprung 26 zweimal seine Krümmungsrichtung, weist jedoch außerhalb des elastischen Vorsprungs 26 eine einheitliche Krümmungsrichtung und im dargestellten Ausführungsbeispiel sogar eine konstante Krümmung, das heißt also eine Kreisform auf.

Die Abdeckkappe gemäß den Figuren 1 und 2 ist als Spritzgussteil aus einem Kunststoff, insbesondere aus einem elastischen Kunststoff, hergestellt.

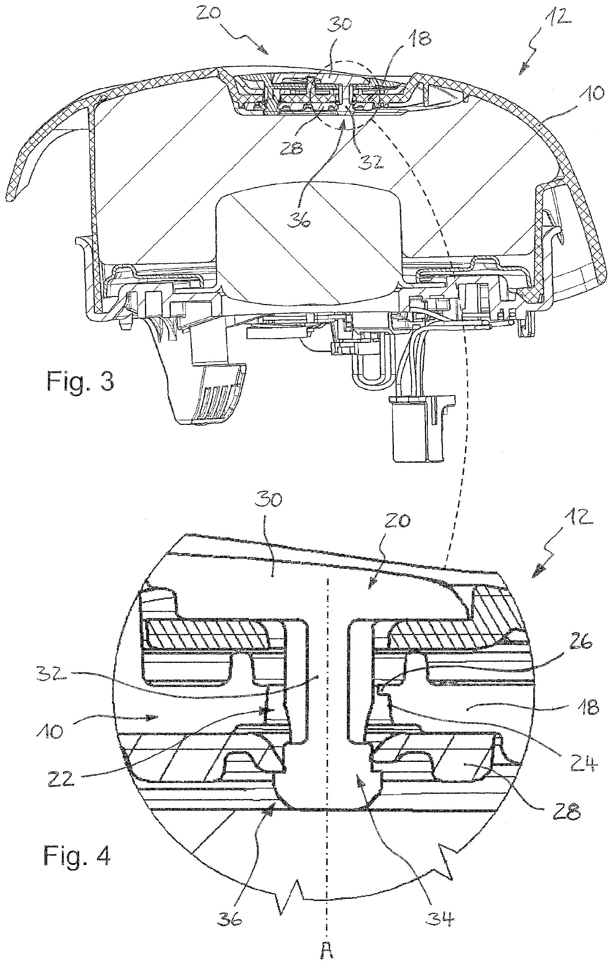

In den Figuren 3 und 4 ist ein Gassackmodul 12 für ein Kraftfahrzeug dargestellt, mit einer Halteplatte 28, einem Dekorelement 20, das einen Dekorabschnitt 30 und zwei Montagefüße 32 aufweist, sowie einer oben beschriebenen Abdecckappe 10, die in axialer Richtung zwischen dem Dekorelement 20 und der Halteplatte 28 angeordnet ist, wobei sich die beiden Montagefüße 32 jeweils ausgehend vom Dekorabschnitt 30 in axialer Richtung durch eine Montageöffnung 22 der Abdeckkappe 10 sowie eine Halteplattenöffnung 34 bis zu einem freien axialen Fußende 36 erstrecken. Die Montagefüße 32 sind an ihren axialen Fußenden 36 fest mit der Halteplatte 28 verbunden, insbesondere verrastet.

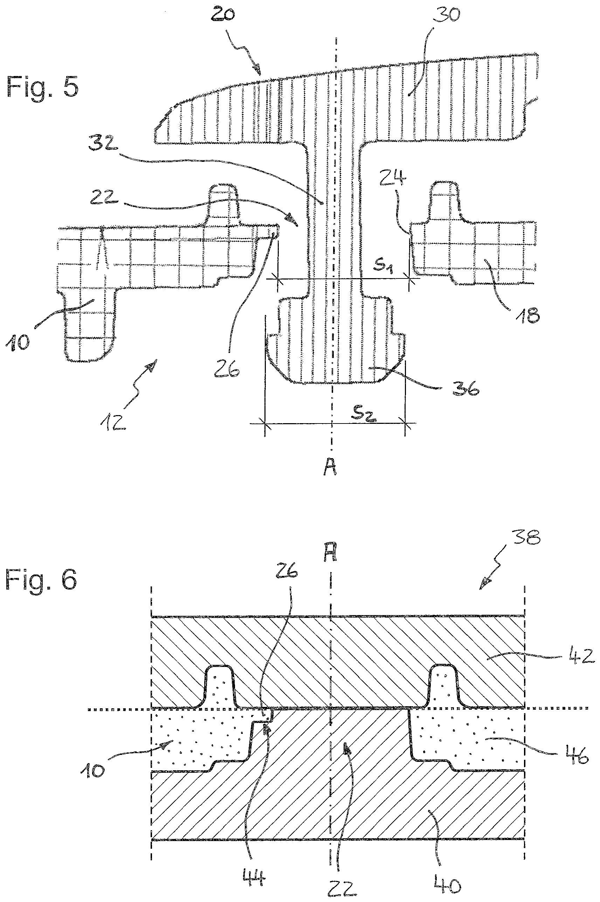

Die Figur 5 zeigt einen Verbindungsbereich zwischen dem Dekorelement 20 und dem Montageabschnitt 18 der Abdeckkappe 10. Hierbei wird deutlich, dass der dargestellte Montagefuß 32 einen radialen Überlapp mit dem elastischen Vorsprung 26 der Abdeckkappe 10 aufweist.

Dieser radiale Überlapp ist zumindest bei in Umfangsrichtung korrekter Ausrichtung des Dekorelements 20 relativ zur Abdeckkappe 10 vorhanden. In einigen Ausführungsvarianten des Gassackmoduls 12 wird die Geometrie der Montageöffnung und des Montagefußes 32 so gewählt, dass der radiale Überlapp ausschließlich bei in Umfangsrichtung korrekter Ausrichtung des Dekorelements 20 relativ zur Abdeckkappe 10 vorhanden ist. Folglich kann ein Monteur beim Einstecken des Dekorelements 20 aufgrund des fehlenden Verformungswiderstands des elastischen Vorsprungs 26 erkennen, dass eine fehlerhafte, beispielsweise um 180° gedrehte Ausrichtung des Dekorelements 20 relativ zur Abdeckkappe 10 vorliegt.

Der radiale Überlapp kommt in diesem Fall dadurch zustande, dass ein lichtes Maß s₁ zwischen dem elastischen Vorsprung 26 und dem gegenüberliegenden Abschnitt des Öffnungsrands 24 der Montageöffnung 22 kleiner ist als die maximale entsprechende Abmessung s₂ des Montagefußes 32.

Konkret weist der Montagefuß 32 gemäß Figur 5 ein verdicktes axiales Fußende 36 auf, wobei das lichte Maß s₁ zwischen dem elastischen Vorsprung 26 und dem gegenüberliegenden Abschnitt des Öffnungsrands 24 kleiner ist als die entsprechende Abmessung s₂ des verdickten axialen Fußendes 36, aber größer als die entsprechende Abmessung des Montagefußes 32 zwischen dem Dekorabschnitt 30 und dem verdickten axialen Fußende 36.

Die Figur 6 zeigt einen Ausschnitt eines Werkzeugs 38 zum Herstellen einer oben beschriebenen Abdeckkappe 10 im Bereich einer Montageöffnung 22 der Abdeckkappe 10. Das Werkzeug umfasst dabei eine erste Spritzgussform 40 und eine zweite Spritzgussform 42, die in axialer Richtung relativ zueinander bewegbar sind und gemeinsam einen Hohlraum in Form der Abdeckkappe 10 definieren können, wobei eine Ausnehmung 44 zur Bildung des radialen Vorsprungs 26 der Abdeckkappe 10 vollständig in der ersten Spritzgussform 40 ausgebildet ist.

Die zweite Spritzgussform 42 grenzt axial an die Ausnehmung 44 an und liegt beim Einfüllen eines Spritzgussmaterials 46 in den Hohlraum zur Bildung der Abdeckkappe 10 an einer axialen Stirnseite des radialen Vorsprungs 26 der Abdeckkappe 10 an.

## Patentansprüche

1. Gassackmodul für ein Kraftfahrzeug, mit
einer Halteplatte (28),
einem Dekorelement (20), das einen Dekorabschnitt (30) und wenigstens einen Montagefuß (32) aufweist, sowie
einer Abdeckkappe (10), die einen Montageabschnitt (18) zur Befestigung des Dekorelements (20) umfasst und in axialer Richtung zwischen dem Dekorelement (20) und der Halteplatte (28) angeordnet ist,
wobei der Montageabschnitt (18) wenigstens eine Montageöffnung (22) mit einer zentralen Montageachse (A) und einem Öffnungsrand (24) aufweist,
wobei am Öffnungsrand (24) ein elastischer Vorsprung (26) ausgebildet ist, der in Richtung zur Montageachse (A) radial einwärts ragt,
wobei sich der wenigstens eine Montagefuß (32) ausgehend vom Dekorabschnitt (30) in axialer Richtung durch eine zugeordnete Montageöffnung (22) der Abdeckkappe (10) bis zu einem freien axialen Fußende (36) erstreckt, und
wobei der wenigstens eine Montagefuß (32) einen radialen Überlapp mit dem elastischen Vorsprung (26) der Abdeckkappe (10) aufweist,
wobei der wenigstens eine Montagefuß (32) ein verdicktes axiales Fußende (36) aufweist, wobei ein lichtes Maß (s₁) zwischen dem elastischen Vorsprung (26) und dem gegenüberliegenden Öffnungsrand (24) der Montageöffnung (22) kleiner ist als die entsprechende Abmessung (s₂) des verdickten axialen Fußendes (36),
**dadurch gekennzeichnet, dass** das lichte Maß (s₁) zwischen dem elastischen Vorsprung (26) und dem gegenüberliegenden Öffnungsrand (24) der Montageöffnung (22) größer ist als die entsprechende Abmessung des Montagefußes (32) zwischen dem Dekorabschnitt (30) und dem verdickten axialen Fußende (36).

2. Gassackmodul nach Anspruch 1, **dadurch gekennzeichnet, dass** der wenigstens eine Montagefuß (32) fest mit der Halteplatte (28) verbunden, insbesondere verrastet ist.

3. Gassackmodul nach wenigstens einem der vorhergehenden Ansprüche, **dadurch gekennzeichnet, dass** der Öffnungsrand (24) in Umfangsrichtung gesehen eine einheitliche Krümmungsrichtung aufweist und lediglich im Bereich des elastischen Vorsprungs (26) seine Krümmungsrichtung wenigstens zweimal ändert.

4. Gassackmodul nach wenigstens einem der vorhergehenden Ansprüche, **dadurch gekennzeichnet, dass** die Abdeckkappe (10) ein Spritzgussteil aus Kunststoff, insbesondere aus einem elastischen Kunststoff ist.

5. Herstellungswerkzeug einer Abdeckkappe (10) eines Gassackmoduls (12) nach einem der vorhergehenden Ansprüche, mit
einer ersten Spritzgussform (40) und einer zweiten Spritzgussform (42), die in axialer Richtung relativ zueinander bewegbar sind und gemeinsam einen Hohlraum in Form der Abdeckkappe (10) definieren können,
**dadurch gekennzeichnet, dass** eine Ausnehmung (44) zur Bildung des elastischen Vorsprungs (26) der Abdeckkappe (10) vollständig in der ersten Spritzgussform (40) ausgebildet ist.

6. Herstellungswerkzeug nach Anspruch 5, **dadurch gekennzeichnet, dass** die zweite Spritzgussform (42) axial an die Ausnehmung (44) angrenzt und beim Einfüllen eines Spritzgussmaterials (46) zur Bildung der Abdeckkappe (10) an einer axialen Stirnseite des elastischen Vorsprungs (26) der Abdeckkappe (10) anliegt.

7. Herstellungsverfahren eines Gassackmoduls (12) nach einem der Ansprüche 1 bis 4,
wobei das Gassackmodul (12) eine Halteplatte (28), ein Dekorelement (20) mit einem Dekorabschnitt (30) und wenigstens einem Montagefuß (32), sowie eine Abdeckkappe (10) aufweist, die einen Montageabschnitt (18) zur Befestigung des Dekorelements (20) umfasst und in axialer Richtung zwischen dem Dekorelement (20) und der Halteplatte (28) angeordnet ist,
wobei der Montageabschnitt (18) wenigstens eine Montageöffnung (22) mit einer zentralen Montageachse (A) und einem Öffnungsrand (24) aufweist,
wobei am Öffnungsrand (24) ein elastischer Vorsprung (26) ausgebildet ist, der in Richtung zur Montageachse (A) radial einwärts ragt,
wobei sich der wenigstens eine Montagefuß (32) ausgehend vom Dekorabschnitt (30) in axialer Richtung bis zu einem verdickten, freien axialen Fußende (36) erstreckt, und
wobei der wenigstens eine Montagefuß (32) des Dekorelements (20) in axialer Richtung in eine zugeordnete Montageöffnung (22) der Abdeckkappe (10) einsteckbar ist und einen radialen Überlapp mit dem elastischen Vorsprung (26) der Abdeckkappe (10) aufweist,
**gekennzeichnet durch** die Verfahrensschritte,
dass der elastische Vorsprung (26) der Abdeckkappe (10) bei der Montage des Dekorelements (20) durch das verdickte Fußende (36) verformt wird und dann zurückschnappt, sodass das Dekorelement (20) mit axialem Spiel, aber dennoch unverlierbar an der Abdeckkappe (10) befestigt ist, und
dass anschließend der wenigstens eine Montagefuß (32) fest mit der Halteplatte (28) verrastet wird.

## Claims

1. An airbag module for an automotive vehicle comprising
a retaining plate (28),
a decoration element (20) having a decoration portion (30) and at least one mounting foot (32) as well as
a cover cap (10) comprising a mounting portion (18) for fastening the decoration element (20) and being arranged in the axial direction between the decoration element (20) and the retaining plate (28),
wherein the mounting portion (18) includes at least one mounting opening (22) having a central mounting axis (A) and an opening rim (24),
wherein at the opening rim (24) an elastic projection (26) protruding radially inwards in the direction of the mounting axis (A) is formed,
wherein the at least one mounting foot (32) extends from the decoration portion (30) in the axial direction through an associated mounting opening (22) of the cover cap (10) to a free axial foot end (36), and
wherein the at least one mounting foot (32) has a radial overlap with the elastic projection (26) of the cover cap (10),
wherein the at least one mounting foot (32) includes a thickened axial foot end (36), an inside width (s₁) between the elastic projection (26) and the opposite opening rim (24) of the mounting opening (22) being smaller than the corresponding dimension (s₂) of the thickened foot end (36),
**characterized in that** the inside width (s₁) between the elastic projection (26) and the opposite opening rim (24) of the mounting opening (22) is larger than the corresponding dimension of the mounting foot (32) between the decoration portion (30) and the thickened axial foot end (36).

2. The airbag module according to claim 1, **characterized in that** the at least one mounting foot (32) is tightly connected to, especially engaged in, the retaining plate (28).

3. The airbag module according to at least one of the preceding claims, **characterized in that** the opening rim (24), when viewed in circumferential direction has a uniform direction of curvature and merely in the area of the elastic projection (26) changes its direction of curvature at least twice.

4. The airbag module according to at least one of the preceding claims, **characterized in that** the cover cap (10) is an injection-molded part made from plastic, especially from an elastic plastic.

5. A tool for manufacturing a cover cap (10) of an airbag module (12) according to any one of the preceding claims comprising
a first injection mold (40) and a second injection mold (42) which are movable relative to each other in the axial direction and can jointly define a cavity in the form of the cover cap (10),
**characterized in that** a recess (44) for forming the elastic projection (26) of the cover cap (10) is completely formed in the first injection mold (40).

6. The tool for manufacturing according to claim 5, **characterized in that** the second injection mold (42) is axially adjacent to the recess (44) and, when the injection-molding material (46) is filled in for forming the cover cap (10), abuts on an axial end face of the elastic projection (26) of the cover cap (10).

7. A method of manufacturing an airbag module (12) according to any one of the claims 1 to 4,
wherein the airbag module (12) includes a retaining plate (28), a decoration element (20) with a decoration portion (30) and at least one mounting foot (32) as well as a cover cap (10) which comprises a mounting portion (18) for fastening the decoration element (20) and is arranged in the axial direction between the decoration element (20) and the retaining plate (28),
wherein the mounting portion (18) includes at least one mounting opening (22) having a central mounting axis (A) and an opening rim (24),
wherein at the opening rim (24) an elastic projection (26) protruding radially inwards in the direction of the mounting axis (A) is formed,
wherein the at least one mounting foot (32) extends from the decoration portion (30) in the axial direction to a thickened free axial foot end (36), and
wherein the at least one mounting foot (32) of the decoration element (20) in the axial direction can be inserted in an associated mounting opening (22) of the cover cap (10) and includes a radial overlap with the elastic projection (26) of the cover cap (10),
**characterized by** the method steps
of the elastic projection (26) of the cover cap (10) being deformed during mounting the decoration element (20) by the thickened foot end (36) and then snaps back so that the decoration element (20) is fastened with axial play but still in a captive manner to the cover cap (10), and
of the mounting foot (32) being subsequently tightly connected to the retaining plate (28).

## Revendications

1. Module airbag pour un véhicule automobile, avec
une plaque de retenue (28),
un élément décoratif (20), qui comporte une partie décorative (30) et au moins un pied de montage (32), ainsi que
un couvercle (10) qui comporte une partie de montage (18) pour la fixation de l'élément décoratif (20) et qui est disposé dans la direction axiale entre l'élément décoratif (20) et la plaque de retenue (28),
pour lequel la section de montage (18) présente au moins une ouverture de montage (22) avec un axe de montage central (A) et un bord d'ouverture (24)
pour lequel une protrusion élastique (26) est formée sur le bord de l'ouverture (24), laquelle fait saillie radialement vers l'intérieur dans la direction de l'axe de montage (A),
pour lequel le au moins un pied de montage (32) s'étend, en partant de la section décorative (30), dans la direction axiale à travers une ouverture de montage associée (22) du couvercle (10) jusqu'à une extrémité de pied axiale libre (36), et
pour lequel le au moins un pied de montage (32) a un chevauchement radial avec la protrusion élastique (26) du couvercle (10),
pour lequel le au moins un pied de montage (32) présente une extrémité de pied axial épaissie (36), pour lequel un jeu (s1) entre ladite protrusion élastique (26) et le bord d'ouverture opposé (24) de ladite ouverture de montage (22) est inférieure à la dimension correspondante (s2) de ladite extrémité de pied axial épaissie (36)
**caractérisé en ce que** le jeu (s1) entre la protrusion élastique (26) et le bord d'ouverture opposé (24) du trou de montage (22) est plus grande que la dimension correspondante du pied de montage (32) entre la partie décorative (30) et l'extrémité axiale épaissie du pied (36).

2. Module airbag selon la revendication 1, **caractérisé en ce que** le au moins un pied de montage (32) est solidement relié, en particulier verrouillé, à la plaque de retenue (28).

3. Module airbag selon au moins une des revendications précédentes, **caractérisé en ce que** le bord d'ouverture (24), vu dans la direction circonférentielle, présente un rayon de courbure uniforme et ne change son rayon de courbure qu'au moins deux fois dans la zone de la projection élastique (26).

4. Module airbag selon au moins une des revendications précédentes, **caractérisé en ce que** le couvercle (10) est une pièce moulée par injection en matière plastique, en particulier en matière plastique élastique.

5. Outil de fabrication d'un couvercle (10) d'un module airbag (12) selon l'une des revendications précédentes, comprenant
un premier moule d'injection (40) et un deuxième moule d'injection (42) qui sont mobiles l'un par rapport à l'autre dans la direction axiale et qui peuvent définir ensemble une cavité en forme du couvercle (10),
**caractérisé en ce qu'**un évidement (44) pour former la protrusion élastique (26) du couvercle (10) est formé entièrement dans le premier moule d'injection (40).

6. Outil de fabrication de la revendication 5, **caractérisé en ce que** le second moule d'injection (42) est axialement adjacent à l'évidement (44) et bute contre une face axiale de la protrusion élastique (26) du couvercle (10) lors du remplissage avec un matériau de moulage par injection (46) pour former le couvercle (10).

7. Procédé de fabrication d'un module airbag (12) selon l'une quelconque des revendications 1 à 4,
pour lequel le module airbag (12) comprend une plaque de retenue (28), un élément décoratif (20) avec une partie décorative (30) et au moins un pied de montage (32), ainsi qu'un couvercle (10), qui comprend une partie de montage (18) pour la fixation de l'élément décoratif (20) et est disposé en direction axiale entre l'élément décoratif (20) et la plaque de retenue (28),
pour lequel la section de montage (18) présente au moins une ouverture de montage (22) avec un axe de montage central (A) et un bord d'ouverture (24)
pour lequel une protrusion élastique (26) est formée sur le bord de l'ouverture (24), laquelle protrusion fait saillie radialement vers l'intérieur dans la direction de l'axe de montage (A),
pour lequel le au moins un pied de montage (32) s'étend de la section décorative (30) dans la direction axiale jusqu'à une extrémité de pied axiale libre et épaissie (36), et
pour lequel le au moins un pied de montage (32) de l'élément décoratif (20) peut être inséré en direction axiale dans une ouverture de montage (22) associée au couvercle (10) et présente un chevauchement radial avec la protrusion élastique (26) du couvercle (10),
**caractérisé par** les étapes suivantes,
que la protrusion élastique (26) du couvercle (10) est déformée par l'extrémité épaissie du pied (36) lors du montage de l'élément décoratif (20) et qu'elle se rétracte ensuite, de sorte que l'élément décoratif (20) est fixé au couvercle (10) avec un jeu axial, mais néanmoins verrouillé, et
en ce que, par la suite, le pied de montage (32), au nombre d'au moins un, est fermement verrouillé sur la plaque de retenue (28).
